# EUROPÄISCHE PATENTSCHRIFT

(11) **EP 1 793 682 B1**
(45) Veröffentlichungstag und Bekanntmachung des Hinweises auf die Patenterteilung: **04.06.2008**
(21) Anmeldenummer: 05787191.5
(22) Anmeldetag: 15.09.2005
(51) Int. Cl.: A22B 5/00

(54) **VERFAHREN UND ANORDNUNG ZUM ZERLEGEN EINER SCHLACHTTIERKÖRPERHÄLFTE**
METHOD AND ARRANGEMENT FOR CARVING HALF A SLAUGHTERED ANIMAL
PROCEDE ET DISPOSITIF POUR DECOUPER UNE MOITIE D'ANIMAL DE BOUCHERIE

(30) Priorität: 16.09.2004 DE 102004045293
(43) Veröffentlichungstag der Anmeldung: 13.06.2007
(73) Patentinhaber: Banss Schlacht- und Fördertechnik GmbH, 35216 Biedenkopf (DE)
(72) Erfinder: BRIEL, Hermann, 35116 Hatzfeld (DE); EGER, Horst, 16356 Ahrensfelde (DE); RUNKEL, Gerhard, 35719 Angelburg (DE); SCHMIDT, Frank, 35232 Dautphetal (DE)
(74) Vertreter: Stoffregen, Hans-Herbert
(86) Internationale Anmeldenummer: PCT/EP2005/009913
(87) Internationale Veröffentlichungsnummer: WO 2006/029854

(56) Entgegenhaltungen:
- EP-A- 0 365 453
- EP-A- 0 744 128
- WO-A-01/67873
- DE-A1- 3 231 862
- US-A- 3 916 484

## Beschreibung

Die Erfindung bezieht sich auf ein Verfahren zum Bearbeiten wie Zerlegen von Schlachttierkörperhälften wie Schweinehälften, wobei jede Schlachttierkörperhälfte durch den Wirkbereich einer Handhabungseinrichtung mittels eines Förderers herabhängend gefördert und mittels eines von der Handhabungseinrichtung betätigten Werkzeugs wie Messer oder Säge in abgestützter Position bearbeitet wird, wobei die Schlachttierkörperhälfte zuvor mittels eines optischen Systems erfasst und hieraus gewonnene Daten zur Steuerung der Handhabungseinrichtung dieser zugeführt werden, wobei während des Bearbeitens der Schlachttierkörperhälfte diese zwischen synchron mit dem Förderer bewegten auf der Handhabungseinrichtung zugewandter Seite der Schlachttierkörperhälfte verlaufenden streifen- oder bandförmigen ersten Elementen und zumindest einem auf gegenüberliegender Seite verlaufenden Weiteren Element fixiert wird. Ferner bezieht sich die Erfindung auf eine Anordnung zum Bearbeiten wie Zerlegen einer Schlachttierkörperhälfte, insbesondere Schweinehälfte, umfassend eine Handhabungseinrichtung mit zumindest einem Bearbeitungswerkzeug wie Messer oder Säge sowie einen Förderer, mittels dessen die Schlachttierkörperhälfte durch den Wirkbereich der Handhabungseinrichtung förderbar ist, ein optisches System wie Digitalkamera oder Laserscanner wie 3D-Laserscanner mit Bildverarbeitungssystem zum Erfassen der Schlachttierkörperhälfte sowie zumindest eine Abstützung, gegenüber der die Schlachttierkörperhälfte während des Bearbeitens abgestützt ist, wobei im Wirkbereich der Handhabungseinrichtung synchron mit dem Förderer mitbewegte handhabungsseitig die Schlachttierkörperhälfte abstützende erste streifen- oder bandförmige Elemente als die Abstützung angeordnet sind.

Der EP-B-1 263 292 sind eine Anordnung und ein Verfahren zum Zerlegen von Schweinehälften zu entnehmen, wobei die Bearbeitung während eines kontinuierlichen Transports von einer Beladeposition zu einer Entladeposition erfolgt, also bei sich bewegender Schweinehälfte. Dabei ist vorgesehen, dass die zu zerlegende Schweinehälfte an einer Wand abgestützt ist, die sich entlang des Transportweges erstreckt.

Eine Anordnung sowie ein Verfahren zum Zerlegen von Schweinehälften werden von der Banss Schlacht- und Fördertechnik GmbH, 35216 Biedenkopf, benutzt. Dabei werden durch den Wirkbereich eines Roboters auf getrennten Förderbahnen Schweinehälften transportiert, wobei die jeweilige Schweinehälfte während des Bearbeitens auf einer stationären Halteplatte fixiert wird. Zur Steuerung des Roboters erfolgt ein optisches Messen der zu bearbeitenden Schweinehälften mittels eines optischen Systems in Form eines 3D-Laserscanners. Über eine Auswertesoftware werden die. Messdaten an die Robotersteuerung weitergeleitet.

Handhabungseinrichtungen in Form von Robotern, mit denen entsprechende Bearbeitungen von Schlachttieren erfolgen können, sind z. B. aus der DE-A-100 04 519 bekannt.

Der DE-A-39 27 145 ist eine Vorrichtung zum automatischen Zerlegen von Schlachttierkörpem zu entnehmen, die in einem Karussell fixiert sind, wobei durch schrittweises Drehen des Karussells das Schlachttier von einer Messstation in eine Bearbeitungsstation bewegt wird.

Ein lagedefiniertes Fixieren eines Schlachttierkörpers, der in einer geneigten Position zu bearbeiten ist, sieht die DE-A-195 18 578 (EP-A-0 744 129) vor. Das Fixieren des Schlachttierkörpers erfolgt über Haltearme, die gleichmäßig über dem Schlachttierkörper verteilt angeordnet sind.

Ein Verfahren und eine Vorrichtung der eingangs genannten Art sind der US-A-4,557,014 zu entnehmen. Dabei wird eine vertikal herabhängende Schlachttierhälfte zwischen streifenförmigen Bändern geführt. Um die Schlachttierhälfte zu zerlegen, werden ausschließlich vertikale Schnitte durchgeführt.

Um verschiedene Zerlegearbeiten bei einem Schlachttier durchzuführen, wird dieses nach der EP-B-0 673 292 von einer Halterung aufgenommen, die horizontal dreh- und schwenkbar ist. Zu der Halterung wird das Schlachttier über einen Förderer transportiert.

Ein Verfahren und eine Anordnung zum Verarbeiten gehäuteter Rumpfhälften von Rindern ist aus der DE-A-24 21 339 bekannt, wobei ein automatisches Zerlegen in unmittelbar aufeinander folgenden Schritten erfolgt.

Ein lagedefiniertes Fixieren einer hängenden Schlachttierkörperhälfte ist aus der DE-A-195 18 578 (EP-A-0 744 128) bekannt. Dabei erfolgt das Bearbeiten bei stationär gehaltener Schlachttierhälfte.

Um Schlachttiere zu zerlegen, werden diese nach der US-A-3,916,484 gescannt und hieraus gewonnene Daten einer Steuerung zum Betätigen von Werkzeugen zugeführt.

Nach der EP-A-0 365 453 wird ein Schlachttier an einer stationären Abstützung fixiert, um zerlegt zu werden.

Der vorliegenden Erfindung liegt die Aufgabe zu Grunde, ein Verfahren und eine Anordnung der eingangs genannten Art so weiterzubilden, dass bei hohem Durchsatz überaus präzise ein Bearbeiten der Schlachttierkörperhälften erfolgen kann, ohne dass ein aufwendiger konstruktiver Aufbau erforderlich ist. Ferner soll wirksam eine pendelnde Bewegung der Schlachttiere bei deren Bearbeitung ausgeschlossen werden.

Verfahrensmäßig wird die Aufgabe im Wesentlichen dadurch gelöst, dass die Schlachttierkörperhälfte über zumindest zwei erste streifen- oder bandförmige Elemente abgestützt wird, die in Längsrichtung der Schlachttierkörperhälfte derart zueinander beabstandet sind, dass die Schlachttierkörperhälfte zwischen den ersten Elementen in ihrem Mittelstück bearbeitet wird, wobei im Wesentlichen vertikal verlaufende Bearbeitungstätigkeiten erfolgen, und dass die Schlachttierkörperhälfte durch den Wirkbereich der Handhabungseinrichtung geneigt derart gefördert wird, dass fördererseitig verlaufender Bereich der Schlachttierkörperhälfte einen geringeren Abstand zu der den Förderer durchsetzenden Vertikalen als bodenseitig verlaufender Bereich der Schlachttierkörperhälfte aufweist. Dabei ist die Schlachttierkörperhälfte derart zu den zumindest zwei ersten Elementen ausgerichtet, dass an diesen die Halbierungsfläche abgestützt ist. Das streifen- oder bandförmige erste Element kann z. B. ein Gurt oder Band sein, das zumindest im Bereich der Handhabungseinrichtung und des dieser vorgeordneten optischen Systems derart geführt ist, dass eine Positionsveränderung in einer senkrecht bzw. quer zur Förderrichtung erfolgenden Richtung unterbleibt. Hierzu kann das streifen- oder bandförmige erste Element z. B. auf einer Leiste abgestützt sein. Andere Transportelemente wie Kunststoff-Schamierketten oder Stahlrollenketten kommen gleichfalls in Frage. Wesentlich ist jedoch, dass erwähntermaßen eine Auslenkung der Schlachttierkörperhälfte quer zur Förderrichtung unterbleibt.

Bezüglich des als Druckelement oder Gegenhalter zu bezeichnenden weiteren Elementes, über das die Schlachttierkörperhälfte eine Kraftbeaufschlagung auf das zumindest eine erste streifen- oder bandförmige Element erfährt, ist anzumerken, dass es sich hierbei z. B. um ein flexibles Element handeln kann. Es besteht aber auch die Möglichkeit, auf der entsprechenden Seite Rollen oder gleichwirkende Elemente anzuordnen, die bevorzugterweise schwimmend gelagert sind, um eine Anpassung an die Form der Schlachttierkörperhälfte zu ermöglichen.

Entsprechend der Erfindung ist vorgesehen, dass die Schlachttierkörperhälfte zumindest während des Bearbeitens mittels der Handhabungseinrichtung geneigt derart gefördert wird, dass fördererseitig verlaufender Bereich des Schlachttierkörpers einen geringeren Abstand zu den Förderer durchsetzter Vertikalen als bodenseitig verlaufender Bereich der Schlachttierkörperhälfte aufweist. Somit nimmt der Abstand in Richtung der Handhabungseinrichtung von den Vorderbeinen in Richtung der Hinterbeine ab, über die die Schlachttierkörperhälfte vom Förderer abhängt.

Um eine sichere Abstützung der Schlachttierkörperhälfte während des Bearbeitens zu gewährleisten, ist vorgesehen, dass die Schlachttierkörperhälfte über zumindest zwei zueinander in Längsrichtung in der Schlachttierkörperhälfte zueinander beabstandete erste und zweite band- oder streifenförmige Elemente abgestützt wird. Dabei kann die Schlachttierkörperhälfte während des Bearbeitens über mehrere erste und zweite Elemente abgestützt werden, wobei in Reihe aufeinander folgende erste bzw. zweite Elemente bereichsweise überlappend zueinander verlaufen.

Die Bearbeitung der Schlachttierkörperhälfte mittels der Handhabungseinrichtung erfolgt im Bereich zwischen dem ersten und zweiten Element, wobei der Abstand so gewählt ist, dass das Mittelstück der Schlachttierkörperhälfte frei zugänglich ist. Dabei erfolgt ein Bearbeiten der Schlachttierkörperhälfte mittels der Handhabungseinrichtung mit im Wesentlichen vertikal verlaufenden Schnitten.

Des Weiteren sieht die Erfindung vor, dass die an ihren Hinterbeinen aufgehängte Schlachttierkörperhälfte nach dem Bearbeiten durch die Handhabungseinrichtung an zumindest einer stationär angeordneten ersten Trenneinrichtung wie Messer vorbei gefördert wird, wobei zunächst der Schulterbereich der Schlachttierkörperhälfte abgetrennt wird. Nach dem Abtrennen des Schulterbereichs kann die Schlachttierkörperhälfte an einer zweiten stationären Trenneinrichtung wie Messer vorbei gefördert werden, wobei das Mittelstück der Schlachttierkörperhälfte abgetrennt wird. Nach dem Abtrennen des Mittelstücks kann der Förderer an einem Kreismesser vorbeigeführt werden, um sodann den Schinken herauszutrennen, sofern eine Schweinehälfte bearbeitet wird.

Unabhängig hiervon erfolgt das Bearbeiten in einem Abschnitt einer Schlachtlinie eines Schlachthofes.

Eine Anordnung der eingangs genannten Art zeichnet sich dadurch aus, dass zumindest zwei erste streifen- oder bandförmige Elemente als Abstützung angeordnet sind, die in Bezug auf die Schlachttierkörperhälfte derart zueinander beabstandet sind, dass das Mittelstück der Schlachttierkörperhälfte zur Durchführung vertikaler Bearbeitungstätigkeiten zugänglich ist, und dass die ersten Elemente zur den Förderer durchsetzenden Vertikalen derart ausgerichtet sind, dass der Abstand einer auf dem ersten Element abgestützten Schlachttierkörperhälfte im Bodenbereich zur Handhabungseinrichtung größer als im förderseitigen Bereich ist. Insbesondere ist vorgesehen, dass zumindest zwei in Längsrichtung der Schlachttierkörperhälfte zueinander beabstandete erste und zweite streifen- oder bandförmige Elemente als Abstützung angeordnet sind. Dabei können mehrere erste bzw. zweite Elemente jeweils in einer Reihe angeordnet sein, wobei aufeinander folgende erste und/oder zweite flexible Elemente überlappend angeordnet sind.

Bei dem flexiblen Element handelt es sich insbesondere um ein Endlosband oder-gurt, das zumindest im Bereich des optischen Systems und der Handhabungseinrichtung derart geführt ist, dass eine Auslenkung quer zur Förderrichtung unterbleibt, so dass eine eindeutige Positionierung sichergestellt ist. Hierzu kann das Endlosband oder der Endlosgurt z. B. auf einer Leiste geführt sein. Als erstes bzw. zweites streifen- oder bandförmiges Element kommen jedoch auch Kunststoffscharnierketten oder Stahlrollenketten in Frage: Als einfachste Ausgestaltung eines Endlosbands oder -gurts kommt ein Element wie ein Keilriemen in Frage.

Um eine eindeutige Fixierung der Schlachttierkörperhälfte auf dem zumindest einen ersten Element sicherzustellen, ist vorgesehen, dass in horizontaler Richtung betrachtet beabstandet zu dem zumindest einen ersten Element zumindest ein die Schlachttierkörperhälfte in Richtung des zumindest einen ersten Elements kraftbeaufschlagtes Druck- oder Führungselement angeordnet ist. Dabei können das Druck- oder Führungselement ein flexibles Element oder z. B. vorzugsweise schwimmend gelagerte Rollen sein. Insbesondere ist vorgesehen, dass jeweils gegenüberliegend dem ersten und/oder zweiten Element ein Druck- oder Führungselement angeordnet ist, das zumindest in dem Bereich verläuft, in dem eine Bearbeitung der Schlachtderkörperhälfte bzw. das optische Messen erfolgt.

Die Erfindung sieht des Weiteren vor, dass im der Handhabungseinrichtung nachgeordneten Förderweg der Schlachttierkörperhälfte zumindest eine stationäre erste Trenneinrichtung wie Messer angeordnet ist. Dabei ist die erste Trenneinrichtung derart zu der Schlachttierkörperhälfte positioniert, dass deren Schulterbereich abtrennbar ist. Ferner kann der Handhabungseinrichtung nachgeordnet eine zweite stationäre Trenneinrichtung wie Messer vorgesehen sein, über die das Mittelstück der Schlachttierkörperhälfte abtrennbar ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmendem bevorzugten Ausführungsbeispiel.

Es zeigen:
- Fig. 1: einen Ausschnitt einer Schlachtlinie im Bereich der Bearbeitung von Schlachttierkörperhälften in deren Förderrichtung,
- Fig. 2: einen weiteren Ausschnitt aus einer Schlachtlinie senkrecht zur Förderrichtung und
- Fig. 3: einen weiteren Ausschnitt der Schlachtlinie.

In zunehmendem Umfang erfolgt nach dem Schlachten ein automatisches Zerlegen von Schlachttieren. Hierzu werden die zu zerlegenden Schlachttiere zunächst optisch gemessen, um sodann die entsprechenden Daten an eine Steuerung einer Handhabungseinrichtung wie Roboter weiterzugeben, um das automatische Zerlegen durchzuführen. Das optische Messen erfolgt dabei insbesondere über Laserscanner wie 3D-Laserscanner. Andere optische Systeme kommen gleichfalls in Frage. Eine entsprechende Technik ist z. B. in der EP-B-1 263 292 oder in dem Prospekt "Banss Meat Technology, Innovations for Industrial and Meat Processing Plants", Banss Schlacht- und Fördertechnik GmbH, Industriestr. 4, D-35216 Biedenkopf, beschrieben. Insoweit wird auch auf die entsprechenden Offenbarungen Bezug genommen.

Wird bei den bekannten Verfahren der zu zerlegende Schlachttierkörper, d. h. grundsätzlich eine Schlachttierkörperhälfte auf einer starren flächigen Abstützung fixiert, so ist erfindungsgemäß vorgesehen, dass zu zerlegende Schlachttierkörperhälften 10, 12, 14, 16 auf streifen- oder bandförmigen Elementen abgestützt und gegenüber diesen fixiert werden, um durch eine Mess- und Zerlegestation geführt zu werden. Hierdurch ist die Möglichkeit gegeben, dass eine problemlose Anpassung an in der Größe voneinander abweichende Schlachttierkörperhälften erfolgt, ohne dass bezüglich der Zerlege- bzw. Bearbeitungsgenauigkeiten Einbußen in Kauf genommen werden müssen.

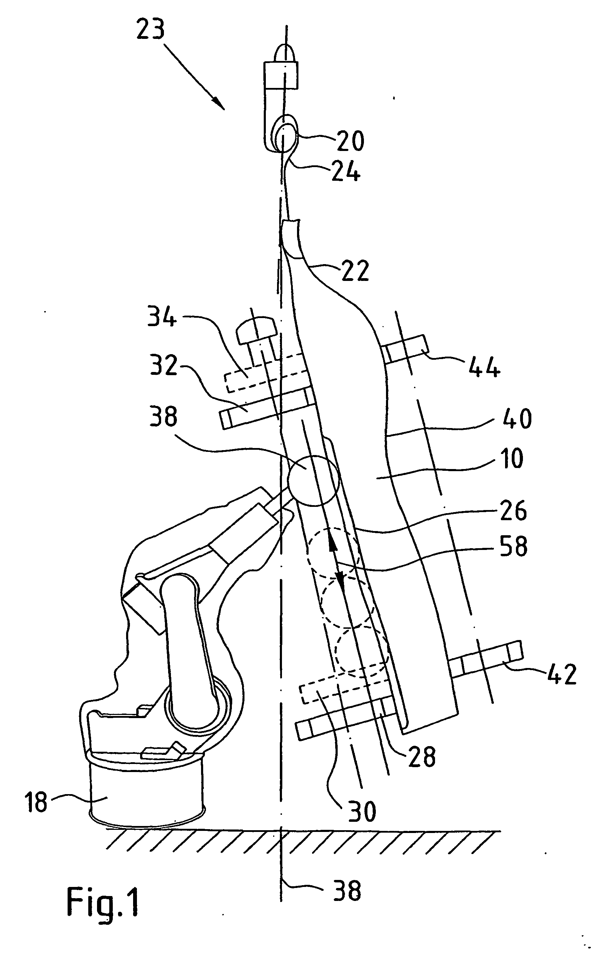

So ist der Fig. 1 ein Ausschnitt im Wirkbereich einer Handhabungseinrichtung, d. h. eines Roboters 18 zu entnehmen, und zwar in Förderrichtung der Schlachttierkörperhälfte 10. Die Schlachttierkörperhälfte 10 ist mit ihrer Halbierungsfläche 26 im Wirkbereich des Roboters 18 auf erste streifen- oder bandförmige Elemente wie ein um Rollen geführtes Endlosband oder einen Endlosgurt wie Keilriemen 28, 30, 32, 34 abgestützt, wobei das Mittelstück 36 der Schlachttierkörperhälfte 10 frei zugänglich ist, damit die Handhabungseinrichtung 18 bzw. eine von dieser betätigte Säge 38 oder ein anderes Bearbeitungswerkzeug zum Zerlegen bzw. zum Bearbeiten der Schlachttierkörperhälfte 10 ordnungsgemäß eingesetzt werden kann. Die die Schlachttierkörperhälfte 10 abstützenden Elemente 28, 30, 32, 34 sind dabei derart zu dem Förderer 23 durchsetzenden Vertikalen 38 in Bezug auf die Handhabungseinrichtung 18 ausgerichtet, dass die Schlachttierkörperhälfte 16 schräg verläuft, wobei im Bodenbereich der Abstand zur Handhabungseinrichtung 18 größer als im fördererseitigen Bereich ist, also von dem Roboter weggerichtet sind.

Ferner sind die Elemente 28, 30, 32, 34 derart geführt, dass eine Auslenkung der Schlachttierkörperhälfte 10 quer zur Förderrichtung nicht erfolgt. Werden als Elemente 28, 30, 32, 34 Gurte oder Bänder oder Riemen benutzt, so werden diese zumindest im Bereich der Messeinrichtung wie 3D-Laserscanner und der Handhabungseinrichtung z. B. auf Leisten geführt. Als Elemente 28, 30, 32, 34 kommen aber auch Kunststoffscharnierketten oder Stahlrollenketten in Frage, die ebenfalls im Bereich des Messens und Zerlegens so zu führen sind, dass eine zu Messverfälschungen bzw. Bearbeitungsungenauigkeiten führende Auslenkung unterbleibt.

Um beim Bearbeiten der Schlachttierkörperhälfte 10, also beim Einwirken des Werkzeugs 38 ein Auslenken der Schlachttierkörperhälfte 10 von der Handhabungseinrichtung 18 weg zu vermeiden, verlaufen auf der Außenseite 40 der Schlachttierkörperhälfte 10 als Gegenhalter oder Druck- oder Führungselemente zu bezeichnende insbesondere flexible Elemente 42, 44 wie Bänder oder Gurte, die vorzugsweise in dem Bereich verlaufen, in dem die vorderseitigen ersten Elemente 28, 30, 32, 34 angeordnet sind. Anstelle von entsprechenden flexiblen Elementen 42, 44 können auch z. B. Rollen vorgesehen sein, die jedoch schwimmend gelagert sein sollten, um eine Anpassung an die Erstreckung der Schlachttierkörperhälfte 10 quer zur Förderrichtung zu ermöglichen. Gleichzeitig müssen die Gegenhalter im erforderlichen Umfang die Schlachttierkörperhälfte 10 auf die ersten Elemente 28, 30, 32, 34 drücken.

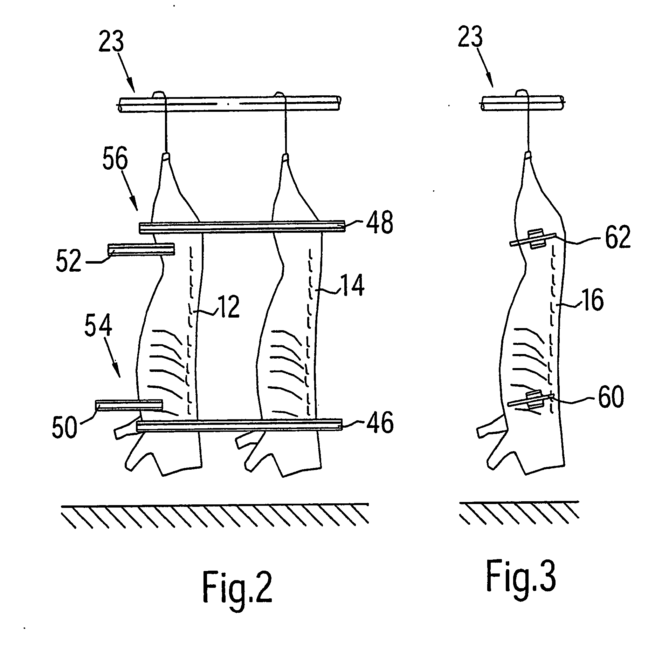

Wie sich aus der Darstellung gemäß Fig. 2 ergibt, werden die zu bearbeitenden bzw. zu zerlegenden Schlachttierkörperhälften 12, 14 dem Grunde nach über mehrere untere erste streifen- oder bandförmige Elemente 46 und obere zweite streifen- oder bandförmige Elemente 48 abgestützt, um die Längenerstreckung der entsprechenden Elemente 46, 48 zu begrenzen, wodurch zusätzlich ein Dehnen quer zur Förderrichtung unterbunden wird. Daher sind mehrere erste Elemente 46, 50 und mehrere zweite Elemente 48, 52 hintereinander angeordnet, wobei eine Überlappung im Übergangsbereich 54 bzw. 56 erfolgt, wie die Fig. 2 verdeutlicht. Entsprechend ist in Fig. 1 eine Darstellung wiedergegeben, in der zwei erste und zwei zweite Elemente 28, 30 bzw. 32, 34 dargestellt sind, die jedoch nur im Überlappungsbereich gleichzeitig die Schlachttierkörperhälfte 10 abstützen.

Die in Längsrichtung der Schlachttierkörperhälfte 10 zueinander beabstandet verlaufenden ersten und zweiten Elemente 46, 48, 50, 52 weisen einen Abstand derart auf, dass das Mittelstück 36 des Schlachttierkörperhälfte 10 frei zugänglich ist.

Durch die Fig. 3 soll verdeutlicht werden, dass nach dem Bearbeiten der Schlachttierkörperhälfte 10 im Bereich des Mittelstücks 36 durch die Handhabungseinrichtung 18 bzw. deren Werkzeug 38, das vorzugsweise Schnitte durchführt, die vertikal verlaufen (Doppelpfeil 58), eine weitere Bearbeitung der Schlachttierkörperhälfte 16 erfolgen kann, indem die Schlachttierkörperhälfte 16 vorzugsweise von dem Förderer 32 vertikal abhängend zunächst an einer ersten stationär angeordneten Trenneinrichtung 60 und sodann an einer zweiten stationären Trenneinrichtung 62 vorbeigeführt wird, in denen zunächst der Schulterbereich und sodann das Mittelstück abgetrennt werden. Die sodann an den Förderer abgehängten Hinterbeine können z. B. mit einem Kreismesser bearbeitet werden, um einen Schinken herauszulösen, sofern es sich bei der Schlachttierkörperhälfte 16 um eine Schweinehälfte handelt. In diesen Bereichen ist eine Abstützung nicht zwingend erforderlich.

## Patentansprüche

1. Verfahren zum Bearbeiten wie Zerlegen von Schlachttierkörperhälften (10, 12, 14, 16) wie Schweinehälften, wobei jede Schlachttierkörperhälfte durch den Wirkbereich einer Handhabungseinrichtung (18) mittels eines Förderers (23) herabhängend gefördert und mittels eines von der Handhabungseinrichtung betätigten Werkzeugs (38) wie Messer oder Säge in abgestützter Position bearbeitet wird, wobei die Schlachttierkörperhälfte zuvor mittels eines optischen Systems erfasst und hieraus gewonnene Daten zur Steuerung der Handhabungseinrichtung dieser zugeführt werden, wobei während des Bearbeitens der Schlachttierkörperhälfte (10, 12, 14, 16) diese zwischen synchron mit dem Förderer (23) bewegten auf der Handhabungseinrichtung (18) zugewandter Seite der Schlachttierkörperhälfte verlaufenden streifen- oder bandförmigen ersten Elementen (28, 30, 32, 34, 46, 48, 50, 52) und zumindest einem auf gegenüberliegender Seite verlaufenden weiteren Element (42, 44) fixiert wird,
**dadurch gekennzeichnet,**
**dass** die Schlachttierkörperhälfte (10, 12, 14,16) über zumindest zwei erste streifen- oder bandförmige Elemente (28, 30, 32, 34, 46, 48, 50, 52) abgestützt wird, die in Längsrichtung der Schlachttierkörpeihälfte derart zueinander beabstandet sind, dass die Schlachttierkörperhälfte zwischen den ersten Elementen in ihrem Mittelstück bearbeitet wird, wobei im Wesentlichen vertikal verlaufende Bearbeitungstätigkeiten erfolgen, und dass die Schlachttierkörperhälfte (10, 12, 14, 16) durch den Wirkbereich der Handhabungseinrichtung (18) geneigt derart gefordert wird, dass der fördererseitig verlaufender Bereich der Schlachttierkörperhälfte einen geringeren Abstand zu der den Förderer (23) durchsetzenden Vertikalen (38) als der bodenseitig verlaufender Bereich der Schlachttierkörperhälfte aufweist.

2. Verfahren nach Anspruch 1,
**dadurch gekennzeichnet,**
**dass** die Schlachttierkörperhälfte (10, 12, 14, 16) mit ihrer Halbierungsfläche der Handhabungseinrichtung (18) zugewandt gefördert wird.

3. Verfahren nach Anspruch 1 oder 2,
**dadurch gekennzeichnet,**
**dass** die Schlachttierkörperhälfte (10, 12, 14, 16) während des Bearbeitens in ihrer handhabungsseitig verlaufenden Halbierungsfläche über mehrere erste und zweite Elemente (46, 48, 50, 52) abgestützt wird, wobei aufeinander folgende erste bzw. zweite Elemente sich überlappend angeordnet sind.

4. Verfahren nach zumindest einem der vorhergehenden Ansprüche,
**dadurch gekennzeichnet,**
**dass** die Schlachttierkörperhälfte (10, 12, 14, 16) über das entlang zur Handhabungseinrichtung (18) abgewandter Seite verlaufende weitere Element (42, 44) in Richtung des ersten bzw. zweiten flexiblen Elementes eine Kraftbeaufschlagung erfährt.

5. Verfahren nach zumindest einem der vorhergehenden Ansprüche,
**dadurch gekennzeichnet,**
**dass** als das weitere Element (42, 44) ein flexibles Element oder Rollen, vorzugsweise schwimmend gelagerte Rollen verwendet wird.

6. Verfahren nach zumindest einem der vorhergehenden Ansprüche,
**dadurch gekennzeichnet,**
**dass** die Schlachttierkörperhälfte (10, 12, 14, 16) an ihren Hinterbeinen aufgehängt gefördert wird und dass nach dem Bearbeiten durch die Handhabungseinrichtung (18) die Schlachttierkörperhälfte an zumindest einer stationär angeordneten ersten Trenneinrichtung (60) wie Messer vorbeigeführt wird, wobei Schulterbereiche der Schlachttierkörperhälfte abgetrennt werden.

7. Verfahren nach zumindest einem der vorhergehenden Ansprüche,
**dadurch gekennzeichnet,**
**dass** die Schlachttierkörperhälfte (10, 12, 14, 16) nach dem Abtrennen des Schulterbereichs an einer stationär eingerichteten zweiten Trenneinrichtung (62) wie Messer vorbeigefördert wird, wobei das Mittelstück (36) der Schlachttierkörperhälfte abgetrennt wird.

8. Verfahren nach zumindest Ansprüchen 8 oder 9,
**dadurch gekennzeichnet,**
**dass** die Schlachttierkörperhälfte (10, 12, 14, 16) an der ersten und/oder der zweiten Trennvorrichtung (60, 62) vertikal von dem Förderer frei abhängend vorbeigeführt wird.

9. Verfahren nach zumindest einem der vorhergehenden Ansprüche,
**dadurch gekennzeichnet,**
**dass** die Schlachttierkörperhälfte (10, 12, 14, 16) eine Schweinehälfte ist und dass nach dem Abtrennen des Mittelstücks (36) bei von dem Förderer (23) ausgehenden Hinterbeinen der Schinken herausgeschnitten wird.

10. Verfahren nach zumindest einem der vorhergehenden Ansprüche,
**dadurch gekennzeichnet,**
**dass** die Bearbeitung in einem Abschnitt einer Schlachtlinie eines Schlachthofes durchgeführt wird.

11. Anordnung zum Bearbeiten wie Zerlegen einer Schlachttierkörperhälfte (10, 12, 14, 16), insbesondere Schweinehälfte, umfassend eine Handhabungseinrichtung (18) mit zumindest einem Bearbeitungswerkzeug (38) wie Messer oder Säge sowie einen Förderer (23), mittels dessen die Schlachttierkörperhälfte durch den Wirkbereich der Handhabungseinrichtung herabhängend förderbar ist, ein optisches System wie Digitalkamera oder Laserscanner wie 3D-Laserscanner mit Bildverarbeitungssystem zum Erfassen der Schlachttierkörperhälfte sowie zumindest eine Abstützung, gegenüber der die Schlachttierkörperhälfte während des Bearbeitens abgestützt ist, wobei im Wirkbereich der Handhabungseinrichtung (18) synchron mit dem Förderer (23) mitbewegte handhabungsseitig die Schlachtticrkörperhälfte (10, 12, 14, 16) abstützende erste streifen- oder bandförmige Elemente (28, 30, 32, 34, 46, 48, 50, 52) als die Abstützung angeordnet sind,
**dadurch gekennzeichnet,**
**dass** zumindest zwei erste streifen- oder bandförmige Elemente (28, 30, 32, 34, 46, 48, 50, 52) als Abstützung angeordnet sind, die in Bezug auf die Schlachttierkörperhälfte (10, 12, 14, 16) derart zueinander beabstandet sind, dass das Mittelstück der Schlachttierkörperhälfte zur Durchführung vertikaler Bearbeitungstätigkeiten zugänglich ist, und dass die ersten Elemente zur den Förderer (23) durchsetzenden Vertikalen (38) derart ausgerichtet sind, dass der Abstand einer auf dem ersten Element abgestützten Schlachttierkörperhälfte im Bodenbereich zur Handhabungseinrichtung größer als im förderseitigen Bereich ist.

12. Anordnung nach Anspruch 11,
**dadurch gekennzeichnet,**
**dass** mehrere erste Elemente (46, 48, 50, 52) jeweils in einer Reihe angeordnet sind.

13. Anordnung nach zumindest einem der Ansprüche 11 oder 12,
**dadurch gekennzeichnet,**
**dass** aufeinander folgende erste Elemente (46, 48, 50, 56) sich überlappend angeordnet sind.

14. Anordnung nach zumindest einem der Ansprüche 11 bis 13,
**dadurch gekennzeichnet,**
**dass** das erste Element (28, 30, 32, 34, 46, 48, 50, 52) ein insbesondere auf einer Führung abgestütztes Endlosband, ein Endlosgurt, eine Kunststoffkette oder Stahlrollenkette ist.

15. Anordnung nach zumindest einem der Ansprüche 11 bis 14,
**dadurch gekennzeichnet,**
**dass** in horizontaler Richtung betrachtet beabstandet zu dem zumindest einem ersten flexiblen Element (28, 30, 32, 34) zumindest ein die Schlachttierkörperhälfte (10) in Richtung des zumindest einen ersten Elementes (28, 30, 32, 34) kraftbeaufschlagendes Druck- oder Führungselement (42) angeordnet ist.

16. Anordnung nach zumindest einem der Ansprüche 11 bis 15,
**dadurch gekennzeichnet,**
**dass** das Druck- oder Führungselement (42) ein flexibles Element wie Gurt oder Band ist.

17. Anordnung nach zumindest einem der Ansprüche 11 bis 16,
**dadurch gekennzeichnet,**
**dass** das Druck- oder Führungselement (42, 44) eine oder mehrere Rollen aufweist, die insbesondere schwimmend gelagert sind.

18. Anordnung nach zumindest einem der Ansprüche 11 bis 17,
**dadurch gekennzeichnet,**
**dass** das Druck- oder Führungselement (42, 44) gegenüberliegend dem ersten Element (28, 30, 32, 34, 46, 48, 50, 52, 54) angeordnet ist.

19. Anordnung nach zumindest einem der Ansprüche 11 bis 18,
**dadurch gekennzeichnet,**
**dass** in der Handhabungseinrichtung (18) nachgeordnetem Förderweg der Schlachttierkörperhälfte (16) zumindest eine stationäre erste Trenneinrichtung (60) angeordnet ist.

20. Anordnung nach zumindest Anspruch 21,
**dadurch gekennzeichnet,**
**dass** die erste Trenneinrichtung (60) derart zu der Schlachttierkörperhälfte (16) positioniert ist, dass deren Schulterbereich abtrennbar ist.

21. Anordnung nach zumindest einem der Ansprüche 11 bis 20,
**dadurch gekennzeichnet,**
**dass** der Handhabungseinrichtung (18) bzw. der ersten Trenneinrichtung (60) nachgeordnet im Förderweg der Schlachttierkörperhälfte (16) eine stationäre zweite Trenneinrichtung (62) angeordnet ist.

22. Anordnung nach zumindest Anspruch 21,
**dadurch gekennzeichnet,**
**dass** die zweite Trenneinrichtung (62) derart zu der Schlachttierkörperhälfte (16) positioniert ist, dass deren Mittelstück (36) abtrennbar ist.

23. Anordnung nach zumindest einem der Ansprüche 11 bis 22,
**dadurch gekennzeichnet,**
**dass** dem Wirkbereich der Handhabungseinrichtung (18) sowohl eine erste als auch eine zweite stationäre Trenneinrichtung (60, 62) nachgeordnet sind.

## Claims

1. Method for processing such as carving of slaughtered animal carcass halves (10, 12, 14, 16) such as sides of pork, where each carcass half is conveyed hanging head-down through the working section of a handling device (18) by a conveyor (23) and processed by a tool such as a knife or saw operated by the handling device in a supported position, where the carcass half is scanned beforehand by an optical system and data thereby obtained is supplied to the handling device for control of the latter, where during processing of the carcass half (10, 12, 14, 16) the latter is fixed between strip-like or band-like first elements (28, 30, 32, 34, 46, 48, 50, 52) and at least one further element (42, 44) on the opposite side, said first elements running synchronously with the conveyor (23) on that side of the carcass half facing the handling device (18),
wherein
the carcass half (10, 12, 14, 16) is supported by at least two first strip-like or band-like elements (28, 30, 32, 34, 46, 48, 50, 52) at a distance to one another in the longitudinal direction of the carcass half such that the latter is processed in its middle section between the first elements, where substantially vertically oriented processing activities are performed, and wherein the carcass half (10, 12, 14, 16) is conveyed through the working section of the handling device (18) so angled that the part of the carcass half running on the conveyor side is at a shorter distance from the vertical line (38) passing through the conveyor (23) than the part of the carcass half running on the floor side.

2. Method according to Claim 1,
wherein
the carcass half (10, 12, 14, 16) is conveyed with its cut surface facing the handling device.

3. Method according to Claim 1 or Claim 2,
wherein
the carcass half (10, 12, 14, 16) is during processing supported in its cut surface running on the handling side by several first and second elements (46, 48, 50, 52), where consecutive first and second elements are arranged overlapping.

4. Method according to at least one of the previous claims,
wherein
the carcass half (10, 12, 14, 16) is subjected to a force by the further element (42, 44) running along the side facing away from the handling device (18) in the direction of the first or second flexible element.

5. Method according to at least one of the previous claims,
wherein
a flexible element or rollers, preferably floatingly mounted rollers, are used as the further element (42, 44).

6. Method according to at least one of the previous claims,
wherein
the carcass half (10, 12, 14, 16) is conveyed suspended by its hind legs and wherein after processing by the handling device (18) the carcass half is moved past at least one stationarily arranged first cutting device (60) such as a knife, where shoulder areas of the carcass half are cut away.

7. Method according to at least one of the previous claims,
wherein
the carcass half (10, 12, 14, 16) is after cutting away of the shoulder area conveyed past a stationarily arranged second cutting device (62) such as a knife, where the middle section (36) of the carcass half is cut away.

8. Method according to at least Claim 8 or Claim 9,
wherein
the carcass half (10, 12, 14, 16) is conveyed past the first and/or second cutting device (60, 62) freely suspended vertically from the conveyor.

9. Method according to at least one of the previous claims,
wherein
the carcass half (10, 12, 14, 16) is a side of pork and wherein after cutting away of the middle section (36) the ham is cut out of the hind legs extending from the conveyor (23).

10. Method according to at least one of the previous claims,
wherein
processing is performed in a section of a slaughtering line of an abattoir.

11. Arrangement for processing such as carving of slaughtered animal carcass halves (10, 12, 14, 16), in particular sides of pork, comprising a handling device (18) with at least one processing tool (38) such as a knife or saw, a conveyor (23) by which the carcass half can be conveyed hanging head-down through the working section of the handling device, an optical system such as a digital camera or laser scanner such as a 3D laser scanner with image processing system for recording the carcass half, and at least one support relative to which the carcass half is supported during processing, where in the working section of the handling device first strip-like or band-like elements (28, 30, 32, 34, 46, 48, 50, 52) supporting the carcass half (10, 12, 14, 16) on the handling side and moved synchronously with the conveyor (23) are arranged as the support,
wherein
at least two first strip-like or band-like elements (28, 30, 32, 34, 46, 48, 50, 52) are arranged as a support and are at a distance to one another relative to the carcass half such that the middle section of the carcass half is accessible for the performance of vertical processing activities, and wherein the first elements are aligned relative to the vertical line (38) passing through the conveyor (23) such that the distance of a carcass half supported on the first element from the handling device is greater in the floor area than in the area on the conveyor side.

12. Arrangement according to Claim 11,
wherein
several first elements (46, 48, 50, 52) are arranged in a row.

13. Arrangement according to at least one of Claims 11 or 12,
wherein
consecutive first elements (46, 48, 50, 56) are arranged overlapping.

14. Arrangement according to at least one of Claims 11 to 13,
wherein
the first element (28, 30, 32, 34, 46, 48, 50, 52) is an endless belt, a plastic chain or a steel roller chain supported in particular on a guide.

15. Arrangement according to at least one of Claims 11 to 14,
wherein
at least one pressing or guiding element (42) is arranged, viewed in the horizontal direction and at a distance from the at least one first flexible element (28, 30, 32, 34), that subjects the carcass half (10) to a force in the direction of the at least one first element (28, 30, 32, 34).

16. Arrangement according to at least one of Claims 11 to 15,
wherein
the pressing or guiding element (42) is a flexible element such as a belt.

17. Arrangement according to at least one of Claims 11 to 16,
wherein
the pressing or guiding element (42, 44) has one or more rollers that are in particular floatingly mounted.

18. Arrangement according to at least one of Claims 11 to 17,
wherein
the pressing or guiding element (42, 44) is arranged opposite the first element (28, 30, 32, 34, 46, 48, 50, 52, 54).

19. Arrangement according to at least one of Claims I 1 to 18,
wherein
at least one stationary first cutting device (60) is arranged in the conveying path of the carcass half (16) behind the handling device (18).

20. Arrangement according to at least Claim 21,
wherein
the first cutting device (60) is positioned relative to the carcass half (16) such that the shoulder area of the latter can be cut away.

21. Arrangement according to at least one of Claims 11 to 20,
wherein
a stationary second cutting device (62) is arranged in the conveying path of the carcass half (16) behind the handling device (18) or the first cutting device (60).

22. Arrangement according to at least Claim 21,
wherein
the second cutting device (62) is positioned relative to the carcass half (16) such that its middle section (36) can be cut away.

23. Arrangement according to at least one of Claims 11 to 22,
wherein
both a first and a second stationary cutting device (60, 62) are arranged behind the working section of the handling device (18).

## Revendications

1. Procédé de transformation, en particulier de découpage de moitiés d'animal de boucherie (10, 12, 14, 16) telles que des moitiés de porc, sachant que chaque moitié d'animal de boucherie est transportée de manière suspendue par un convoyeur (23) à travers la zone d'action d'un dispositif de manipulation (18) et transformée en position d'appui par un outil (38), tel qu'un couteau ou une scie, actionné par le dispositif de manipulation, sachant que la moitié d'animal de boucherie a été auparavant saisie au moyen d'un système optique et que les données ainsi obtenues ont été envoyées au dispositif de manipulation pour permettre la commande de celui-ci, sachant que, durant la transformation de la moitié d'animal de boucherie (10, 12, 14, 16), celle-ci est fixée entre des premiers éléments (28, 30, 32, 34, 46, 48, 50, 52) en forme de ruban ou de bande s'étendant sur la face de la moitié d'animal de boucherie orientée vers le dispositif de manipulation (18) et se déplaçant de manière synchrone au convoyeur (23), et au moins un autre élément (42, 44) situé sur la face opposée,
**caractérisé en ce**
**que** la moitié d'animal de boucherie (10, 12, 14, 16) est maintenue par au moins deux premiers éléments en forme de bande ou de ruban (28, 30, 32, 34, 46, 48, 50, 52) espacés de telle manière dans le sens longitudinal de la moitié d'animal de boucherie que cette dernière est transformée entre les premiers éléments, dans sa partie centrale, sachant que le processus de transformation a lieu essentiellement à la verticale, et que la moitié d'animal de boucherie (10, 12, 14, 16) est transportée de façon inclinée à travers la zone d'action du dispositif de manipulation (18) de telle sorte que la partie de la moitié d'animal de boucherie située du côté du convoyeur présente un écart moins important par rapport à la verticale (38) traversant le convoyeur (23) que la partie de l'animal de boucherie située du côté du sol.

2. Procédé selon la revendication 1,
**caractérisé en ce**
**que** la surface de bissection est tournée vers le dispositif de manipulation (18) lors du transport de la moitié d'animal de boucherie (10, 12, 14, 16).

3. Procédé selon la revendication 1 ou 2,
**caractérisé en ce**
**que** la moitié d'animal de boucherie (10, 12, 14, 16) est maintenue par plusieurs premiers et seconds éléments (46, 48, 50, 52) pendant la transformation dans sa surface de bissection située du côté du dispositif de manipulation, sachant que les premiers ou seconds éléments se suivant sont disposés de manière à se chevaucher.

4. Procédé selon au moins une des revendications précédentes,
**caractérisé en ce**
**que** la moitié d'animal de boucherie (10, 12, 14, 16) est soumise à l'action d'une force dans la direction du premier ou second élément flexible par l'intermédiaire de l'élément supplémentaire (42, 44) situé sur la face opposée au dispositif de manipulation (18).

5. Procédé selon au moins une des revendications précédentes,
**caractérisé en ce**
**qu'**un élément flexible ou des galets, de préférence des galets logés de manière flottante sont utilisés comme élément supplémentaire (42, 44).

6. Procédé selon au moins une des revendications précédentes,
**caractérisé en ce**
**que** la moitié d'animal de boucherie (10, 12, 14, 16) est transportée pendue par la patte arrière et que, après la transformation par le dispositif de manipulation (18), la moitié d'animal de boucherie est conduite vers au moins un premier dispositif de coupe (60) stationnaire, tel qu'un couteau, l'épaule étant alors séparée de la moitié d'animal de boucherie.

7. Procédé selon au moins une des revendications précédentes,
**caractérisé en ce**
**que** la moitié d'animal de boucherie (10, 12, 14, 16) est, après la découpe de l'épaule, conduite vers un second dispositif de coupe stationnaire (62), tel qu'un couteau, la partie centrale de la moitié d'animal de boucherie étant alors séparée.

8. Procédé selon au moins une des revendications précédentes,
**caractérisé en ce**
**que** la moitié d'animal de boucherie (10, 12, 14, 16) est conduite verticalement et en suspension libre par le convoyeur vers et devant le premier et/ou second dispositif(s) de coupe (60, 62).

9. Procédé selon au moins une des revendications précédentes,
**caractérisé en ce**
**que** la moitié d'animal de boucherie (10, 12, 14, 16) est une moitié de porc, et que, après séparation de la partie centrale (36), le jambon est découpé dans le quartier arrière accroché au convoyeur (23).

10. Procédé selon au moins une des revendications précédentes,
**caractérisé en ce**
**que** la transformation a lieu sur une section d'une ligne d'abattage d'un abattoir.

11. Dispositif de transformation, en particulier de découpage d'une moitié d'animal de boucherie (10, 12, 14, 16), en particulier d'une moitié de porc, comprenant un dispositif de manipulation (18) avec au moins un outil de transformation (38) tel qu'un couteau ou une scie, ainsi qu'un convoyeur (23), au moyen duquel la moitié d'animal de boucherie peut être transportée de manière suspendue à travers la zone d'action du dispositif de manipulation, un système optique, tel qu'une caméra numérique ou un scanner laser, par exemple de type scanner laser 3D avec système de traitement d'images, pour la saisie de la moitié d'animal de boucherie, ainsi qu'au moins un appui contre lequel la moitié d'animal de boucherie est appuyée durant la transformation, sachant que, dans la zone d'action du dispositif de manipulation (18), des éléments en forme de bande ou de ruban (28, 30, 32, 34, 46, 48, 50, 52) se déplaçant de manière synchrone au convoyeur (23) et soutenant la moitié d'animal de boucherie (10, 12,14, 16) du côté du dispositif de manipulation sont disposés en tant qu'appui,
**caractérisé en ce**
**que** sont disposés en tant qu'appui au moins deux premiers éléments en forme de bande ou de ruban (28, 30, 32, 34, 46, 48, 50, 52) qui, par rapport à la moitié d'animal de boucherie (10, 12, 14, 16), sont espacés de telle manière les uns par rapport aux autres que la partie centrale de la moitié d'animal de boucherie est accessible pour la réalisation d'un processus de transformation à la verticale, et que les premiers éléments sont orientés de telle façon par rapport à la verticale (38) traversant le convoyeur (23) que l'écart d'une moitié d'animal de boucherie appuyée sur le premier élément est plus important dans la partie située vers le sol que dans la partie située vers le convoyeur.

12. Dispositif selon la revendication 11,
**caractérisé en ce**
**que** plusieurs premiers éléments (46, 48, 50, 52) sont disposés respectivement en une rangée.

13. Dispositif selon au moins une des revendications 11 ou 12,
**caractérisé en ce**
**que** les premiers éléments se suivant (46, 48, 50, 56) sont disposés de manière à se chevaucher.

14. Dispositif selon au moins une des revendications 11 à 13,
**caractérisé en ce**
**que** le premier élément (28, 30, 32, 34, 46, 48, 50, 52) est une bande sans fin soutenue en particulier par un dispositif de guidage, une courroie continue, une chaîne en plastique ou une chaîne à rouleaux en acier.

15. Dispositif selon au moins une des revendications 11 à 14,
**caractérisé en ce**
**qu'**au moins un élément de guidage ou de pression (42) exerçant une force sur la moitié d'animal de boucherie (10) en direction du premier élément (28, 30, 32, 34) au moins en présence est disposé, vu dans le sens horizontal, à distance par rapport au premier élément flexible (28, 30, 32, 34) au moins en présence.

16. Dispositif selon au moins une des revendications 11 à 15,
**caractérisé en ce**
**que** l'élément de guidage ou de pression (42) est un élément flexible tel qu'une courroie ou une bande.

17. Dispositif selon au moins une des revendications 11 à 16,
**caractérisé en ce**
**que** l'élément de guidage ou de pression (42, 44) présente un ou plusieurs galets logés de manière flottante.

18. Dispositif selon au moins une des revendications 11 à 17,
**caractérisé en ce**
**que** l'élément de guidage ou de pression (42, 44) est disposé en face du premier élément (28, 30, 32, 34, 46, 48, 50, 52, 54).

19. Dispositif selon au moins une des revendications 11 à 18,
**caractérisé en ce**
**qu'**au moins un premier dispositif de coupe (60) stationnaire est disposé sur le trajet parcouru par la moitié d'animal de boucherie (16) après le dispositif de manipulation (18).

20. Dispositif selon au moins la revendication 21,
**caractérisé en ce**
**que** le dispositif de coupe (60) est placé de telle manière par rapport à la moitié d'animal de boucherie (16) que la région de l'épaule de cette dernière peut être découpée et séparée du reste.

21. Dispositif selon au moins une des revendications 11 à 20,
**caractérisé en ce**
**qu'**au moins un second dispositif de coupe (62) stationnaire est disposé sur le trajet parcouru par la moitié d'animal de boucherie (16) après le dispositif de manipulation (18) ou le premier dispositif de coupe (60).

22. Dispositif selon au moins la revendication 21,
**caractérisé en ce**
**que** le second dispositif de coupe (62) est placé de telle manière par rapport à la moitié d'animal de boucherie (16) que la partie centrale (36) de cette dernière peut être découpée et séparée du reste.

23. Dispositif selon au moins une des revendications 11 à 22,
**caractérisé en ce**
**qu'**aussi bien un premier qu'un second dispositifs de coupe stationnaire (60, 62) sont positionnés après la zone d'action du dispositif de manipulation (18).
